# EUROPEAN PATENT SPECIFICATION

(11) **EP 1 694 891 B1**
(45) Date of publication and mention of the grant of the patent: **09.06.2010**
(21) Application number: 04821046.2
(22) Date of filing: 30.11.2004
(51) Int. Cl.: D01F 9/12, D01F 9/127, C01B 31/02, H01M 4/86, H01J 1/30

(54) **RHENIUM CATALYSTS AND METHODS FOR PRODUCTION OF SINGLE-WALLED CARBON NANOTUBES**
RHENIUMKATALYSATOREN UND VERFAHREN ZUR HERSTELLUNG VON EINWANDIGEN KOHLENSTOFFNANORÖHREN
CATALYSEURS DE RHÉNIUM ET MÉTHODES POUR LA PRODUCTION DE NANOTUBES DE CARBONE A PAROI UNIQUE

(30) Priority: 15.12.2003 US 529665 P
(43) Date of publication of application: 30.08.2006
(73) Proprietor: Resasco, Daniel, E., Norman, OK 73072 (US); Chungchamroenkit, Pisan, Bangkok 10100 (TH); Herrera, Jose E., Norman OK 73069 (US); Balzano, Leandro, Norman, OK 73071 (US)
(72) Inventor: Resasco, Daniel, E., Norman, OK 73072 (US); Chungchamroenkit, Pisan, Bangkok 10100 (TH); Herrera, Jose E., Norman OK 73069 (US); Balzano, Leandro, Norman, OK 73071 (US)
(74) Representative: Hallybone, Huw George
(86) International application number: PCT/US2004/040022
(87) International publication number: WO 2005/065100

(56) References cited:
- US-A1- 2002 102 194
- US-B2- 6 713 519
- US-B2- 6 872 330
- US-B2- 6 913 789
- US-B2- 6 942 921
- HONGJIE DAI ET AL: "SINGLE-WALL NANOTUBES PRODUCED BY METAL-CATALYZED DISPROPORTIONATION OF CARBON MONOXIDE" CHEMICAL PHYSICS LETTERS, NORTH-HOLLAND, AMSTERDAM, NL, vol. 260, no. 3/4, 27 September 1996 (1996-09-27), pages 471-475, XP000610009 ISSN: 0009-2614

## Description

### BACKGROUND OF THE INVENTION

This Invention is related to the field of catalysts for producing carbon nanotubes and methods of their use, and more particularly, but not by way of limitation, single-walled carbon nanotubes, and to composites and products comprising single-walled carbon nanotubes.

Carbon nanotubes (also referred to as carbon fibrils) are seamless tubes of graphite sheets with full fullerene caps which were first discovered as multi-layer concentric tubes or multi-walled carbon nanotubes and subsequently as single-walled carbon nanotubes in the presence of transition metal catalysts. Carbon nanotubes have shown promising applications including nanoscale electronic devices, high strength materials, electron field emission, tips for scanning probe microscopy, and gas storage.

Generally, single-walled carbon nanotubes are preferred over multi-walled carbon nanotubes for use in these applications because they have fewer defects and are therefore stronger and more conductive than multi-walled carbon nanotubes of similar diameter. Defects are less likely to occur in single-walled carbon nanotubes than in multi-walled carbon nanotubes because multi-walled carbon nanotubes can survive occasional defects by forming bridges between unsaturated carbon valances, while single-walled carbon nanotubes have no neighboring walls to compensate for defects.

Single-walled carbon nanotubes exhibit exceptional chemical and physical properties that have opened a vast number of potential applications.

However, the availability of these new single-walled carbon nanotubes in quantities and forms necessary for practical applications is still problematic. Large scale processes for the production of high quality single-walled carbon nanotubes are still needed, and suitable forms of the single-walled carbon nanotubes for application to various technologies are still needed. It is to satisfying these needs that the present invention is directed.

A number of researchers have investigated different catalyst formulations and operating conditions for producing carbon nanotubes. Yet obtaining high quality SWNT has not been always possible with this method. Among the various catalyst formulations previously investigated, Co-Mo catalysts supported on silica gel which had low Co;Mo ratios exhibited the best performance.

In previous patents and applications, (U.S. Patent No. 6,333,016. U.S. Patent No. 6,413,487, U.S. Published Application 2002/0165091 and U.S. Published Application 2003/0091496) we established that other elements of the Group VIb (Cr and W) exhibit similar behavior as Mo in stabillizing Co and generating selective catalysts for SWNT synthesis. It is the objective of the present work to identify other metal catalysts effective in selectively producing single-walled carbon nanotubes.

WO 03/059813 discloses carbon nanotube structures in which nanotubes are disposed over a porous support such as a foam, felt, mesh, or membrane. Techniques of making these structures are also disclosed. In some of these techniques a support is pre-treated with a templated surfactant composition to assist with the formation of a nanotube layer.

WO 03/026796 discloses a method of forming a nano-supported sponge catalyst on a substrate comprised of depositing an active catalytic metallic element on the substrate and depositing a structural metallic element with the active catalytic metallic element to form a mixed metal alloy layer.

US 2003/042834 discloses a field emission device and method of forming a field emission device. The field emission device comprises a substrate having a deformation temperature that is less than 650°C and a nano-supported catalyst formed on the substrates that has active catalytic particles that arc less than 500 nm.

### SUMMARY OF INVENTION

The present invention a carbon nanotube product, comprising a support material; a catalytic substrate comprising: rhenium and at least one Group VIII metal in a ratio of from 20:1 to 1:20 disposed on the support material; and carbon nanotubes on the catalytic substrate.

The present invention further provides a nanotube-polymer composite comprising a polymer and the carbon nanotube product of the present invention.

The present invention further provides a ceramic composite material comprising the carbon nanotube products of the present invention and a ceramic matrix.

The present invention further providers a fuel cell electrode comprising the carbon nanotube product of the present invention, an electrocatalyst, and an ionomer.

The present invention further provides a field emission material comprising the carbon nanotube product of the present invention and a binder, and wherein the field emission material can be adheringly dispersed over an electrode surface.

The present, invention further provides a method for producing carbon nanotubes, comprising: providing a catalytic substrate comprising: a support material, rhenium and at least one Group VIII metal in a ratio of from 20:1 to 1:20 disposed on the support material; and contacting the catalytic substrate with a carbon-containing gas in a reactor at a temperature sufficient to catalytically produce carbon nanotubes, said carbon nanotubes being present on the catalytic substrate.

The present invention further provides a carbon nanotube product comprising the carbon nanotubes and catalytic substrate of the method of the present invention.

### BRIEF DESCRIPTION OF THE DRAWINGS

Fig. 1 is a graph showing the Temperature Programmed Reduction (TPR) profiles of several types of metal/silica catalysts.

Fig. 2 is a graph showing the Raman spectrum of a SWNT product by a Co-Re catalyst.

Fig. 3 is a graph showing the Temperature Programmed Oxidation (TPO of spent Co-Re (1:4) catalyst at different reduction temperatures.

Fig. 4 is a graph showing Raman spectra obtained on carbon products formed on a Co-Re (1:4) catalyst for different pre-reduction pretreatments.

Fig. 5 is a graph showing variability in nanotube quality (1-d/g) at various reduction temperatures.

Fig. 6 is a graph showing TPO results of spent Co-Re (1:4) catalyst at different reaction temperatures.

Fig. 7 is a graph showing TPO results of spent Co-Re catalysts at different Co:Re ratios.

### DETAILED DESCRIPTION OF THE INVENTION

The present invention is directed to catalysts comprising rhenium (Re) and at least one Group VIII metal such as Co, Ni, Ru, Rh, Pd, Ir, Fe and/or Pt. The catalyst may further comprise a Group VIb metal such as Cr, W, or Mo, and/or a Group Vb metal, such as Nb. The Re and the Group VIII metal are disposed on a support material, such as silica. These catalysts are then used to produce carbon nanotubes and preferably predominantly single-walled carbon nanotubes which can then be used in a variety of different applications as described in more detail below.

A synergism exists between the at least two metal components of the bimetallic catalyst contemplated herein in that catalytic particles or substrates containing the catalyst are much more effective catalysts for the production of single-walled carbon nanotubes than catalytic particles containing either a Group VIII metal or Re alone.

While the invention will now be described in connection with certain preferred embodiments in the following examples so that aspects thereof may be more fully understood and appreciated, it is not intended to limit the invention to these particular embodiments. On the contrary, it is intended to cover all alternatives, modifications and equivalents as may be included within the scope of the invention as defined by the appended claims. Thus, the following examples, which include preferred embodiments will serve to illustrate the practice of this invention, it being understood that the particulars shown are by way of example and for purposes of illustrative discussion of preferred embodiments of the present invention only and are presented in the cause of providing what is believed to be the most useful and readily understood description of formulation procedures as well as of the principles and conceptual aspects of the invention.

Experimental

A series of bimetallic Co-Re catalysts comprising a silica support was prepared by Incipient wetness impregnation. The bimetallic catalysts, prepared by co-impregnation of aqueous rhenium chloride and Co nitrate solutions, had Co:Re molar ratios of 2:1, 1:1, and 1:4. In this series, the amount of Co was kept constant for all catalysts at 1.3 wt. %, while the amount of Re was varied accordingly. The SiO₂ support was a silica gel from Aldrich, 70-230 mesh, average pore size 6 nm, BET area 480 m²/g, pore volume 0.75 cm³/g. Other types of silica or other supports as discussed below may be used. Five grams of SiO₂ support were impregnated using a liquid-to-solid ratio of 0.6 cm³/g. After impregnation, the solids were dried overnight at 120°C and then calcined in a horizontal fixed bed reactor for 3 h at 500°C in dry-air flow of 50 scc/min. The solids may be dried and/or calcined under different conditions.

Temperature programmed reduction (TPR) experiments were conducted by passing a continuous flow of 5% H₂/Ar over approximately 30 mg of the calcined catalyst at a flow rate of 10 cm³/min, while linearly increasing the temperature at a heating rate of 8°C/min. The hydrogen uptake as a function of temperature was monitored using a thermal conductivity detector, SRI model 110 TCD. The TCD was calibrated for hydrogen consumption using TPR profiles of known amounts of CuO and relating the peak area to hydrogen uptake.

The Raman spectra of the nanotube product were obtained in a Jovin Yvon-Horiba LabRam 800 equipped with a CCD detector and with three different laser excitation sources having wavelengths of 632 (He-Ne laser) 514 and 488 nm (Ar laser). Typical laser powers ranged from 3.0 to 5.0mW; integration times were around 15 sec for each spectrum; three Raman spectra were averaged for each sample.

To study the effect of reaction parameters in the Co-Re system, the production of SWNT by CO disproportionation was conducted on a catalyst with a Co:Re molar ratio of 1:4 under different conditions. For the SWNT production on the Co-Re/SiO₂ catalysts, 0.5 g of a calcined sample was placed in a horizontal tubular packed-bed reactor; the reactor was 12 inches long and had a diameter of 0.5 inches. After loading the catalyst, the reactor was heated in 100 scc/min H₂ flow to different temperatures in the range 600°C-900°C at 10°C/min. Then, under 100 scc/min flow of He, it was heated up at the same rate to the specified reaction temperature, which ranged from 750°C to 950°C. Subsequently, Co was introduced at a flow rate of 850 cm³/min at 84 psia for 2 hours. At the end of each run, the system was cooled down under He flow. The total amount of deposited carbon was determined by temperature-programmed oxidation (TPO) following the method described elsewhere. Other carbon-containing gases or fluids can be used in substitute of CO, as indicated in U.S. Patent 6,333,016 and elsewhere herein.

Results

Characterization of the Catalysts

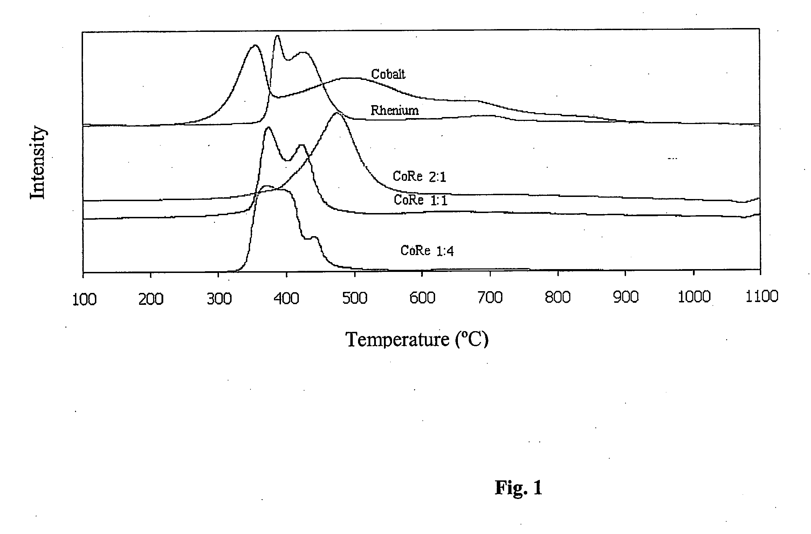

*Temperature Programmed Reduction (TPR)*: The reduction profiles of calcined monometallic Co/SiO₂ and Re/SiO₂ catalysts together with those of bimetallic Co:Re/SiO₂ catalysts with Co:Re molar ratios = (2:1), (1:1), and (1:4) are shown in Fig. 1. The TPR profile of the Co monometallic catalyst shows two peaks at 340°C and 500°C, which can be ascribed to the reduction of Co oxide species.

The reduction of the monometallic Re catalysts also exhibits two peaks at 390°C and 420°C. Only the monometallic Co catalyst starts its reduction below 300°C. The disappearance of this low temperature Co reduction peak in the bimetallic catalysts is an indication of the Co-Re interaction.

Production of single-walled carbon nanotubes

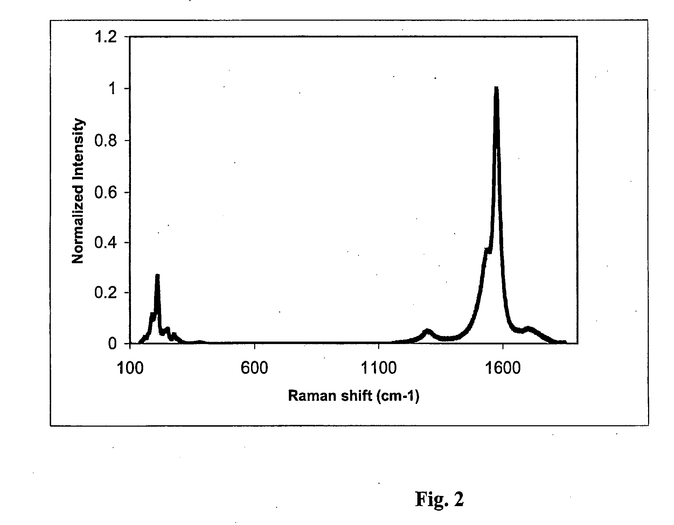

The Co-Re catalyst gives a nanotube product of high selectivity toward SWNT. The Raman spectrum of the carbon nanotube product (Fig. 2) indicates the presence of SWNT (breathing mode bands) and a low degree of disorder (low D/G ratio).

We have reported in previous articles that the silica-supported Co-Mo system displays a very high selectivity in the production of single wall nanotubes by Co disproportionation. When the Co:Mo(1:3)/SiO₂ catalyst which had exhibited a high yield and selectivity toward SWNT was employed without a reduction step or with an exceedingly high reduction temperature, poor SWNT yields were attained.

Herein, we investigated a Co-Re (1:4)/SiO₂ catalyst for SWNT production after different pre-reduction treatments. The reaction temperature for the CO disproportionation after a pre-reduction step was also varied from 750°C up to 950°C. At the end of a two hour reaction period, the spent catalyst containing the carbon deposits was cooled down in He flow. The characterization of the carbon deposits was done by way of three techniques, including temperature programmed oxidation (TPO), transmission electron microscopy (TEM), and Raman spectroscopy.

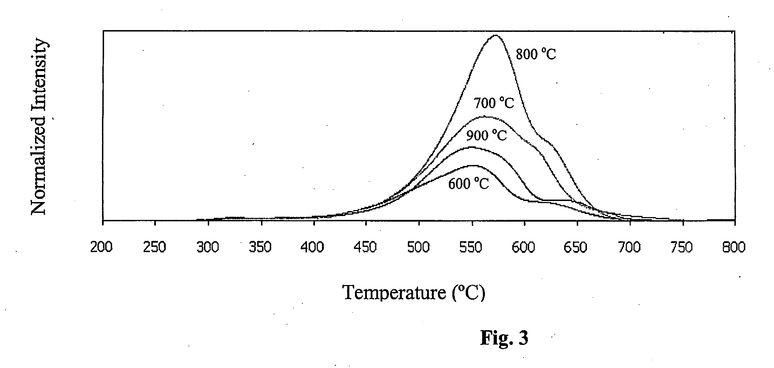

We have shown that from the TPO analysis one can obtain a quantitative measure of the carbon yield and selectivity towards SWNT. The TPO results obtained in the present work are summarized in Figures 3-4 and illustrate the strong influence of the reaction temperature and catalyst pretreatment on SWNT yield and selectivity.

Effect of pre-reduction temperatures:

The effect of pre-reduction temperature was studied on the Co-Re (1:4) catalyst at a constant synthesis reaction temperature of 850°C. The TPO of the SWNT products obtained at 850°C after different pre-reduction treatments is shown in Fig. 3.

It is seen that all the TPO profiles contain two peaks including one at around 560°C and one at around 630°C. We have previously shown that the intensity ratio of the two TPO peaks (560°C/630°C) is a rough indication of the selectivity since the first peak is associated with the oxidation of SWNT, while the second one is due to the oxidation of undesired carbon forms (defective multi-walled nanotubes and nanofibers). Accordingly, the higher reduction temperatures seem to enhance selectivity. At the same time, the carbon yield, which can be predicted from the overall peak intensity, has a maximum after reduction at about 800°C.

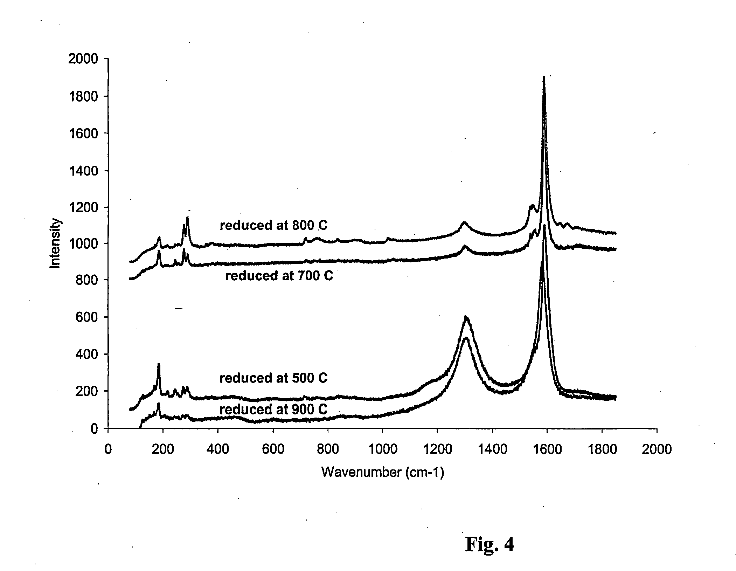

In addition to TPO, Raman spectroscopy (Fig. 4) provides valuable information about the structure of carbon nanotubes. The analysis of radial A1g breathing mode (below 300 cm⁻¹) gives direct information about the tubes diameter, while the analysis of the G band (related to ordered carbon including nanotubes and ordered graphite) in the tangential mode range i.e., 1400-1700 cm⁻¹, provides information on the electronic properties of the nanotubes. In addition, the analysis of the so-called D-band at around 1350 cm⁻¹ gives an indication of the level of disordered carbon (amorphous carbon and carbon fibers for example). The size of the D band relative to the G band at around 1590 cm⁻¹ has been used as qualitative measurement of the formation of undesirable forms of carbon.

Figure 4 shows the Raman spectra obtained on the carbon deposits formed on the Co Re(1:4)/SiO₂ catalyst for different pre-reduction pretreatments, the pretreatments at 700°C and 800°C resulted in spectra that give evidence of SWNT of high quality. In both cases, the size of the D band relative to the G band was very small. In good agreement, the TPO indicated high selectivity to SWNT.

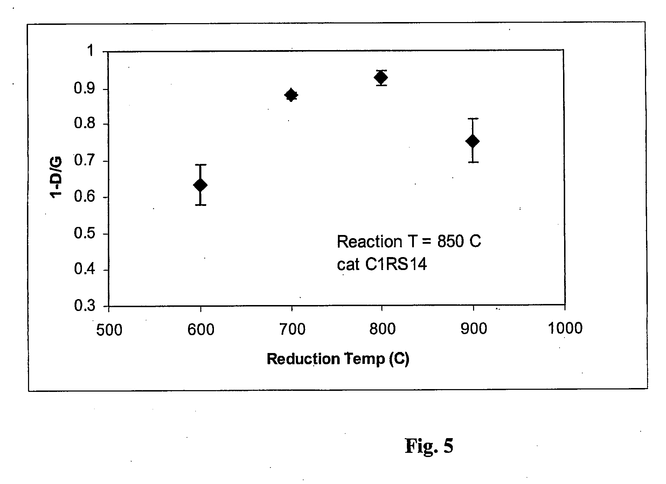

To quantify the effect of reduction temperature on the quality of nanotubes, we have defined a "quality parameter" in terms of the relative intensity of the D and G bands. The higher is this parameter (1 - D/G), the better the quality of the SWNT (i.e., the higher the percentage of single-walled carbon nanotubes). As shown in Fig. 5, the pre-reduction temperature has an important effect on SWNT quality, which exhibits a maximum with a pre-reduction temperature of about 800°C. Preferably the pre-reduction temperature is in a range of from 650°C to 850°C.

It is also observed in Fig. 5 that the variability of quality (as indicated by the error bars) is much greater after pretreatment at both, lower and higher temperatures than the optimum.

It is important to note that the Co-Re catalysts perform best under conditions in which Co and Re both are in the reduced metallic state before the catalyst is exposed to nanotube-forming conditions. This is significantly different from use of a Co-Mo catalyst, which must be in the non-reduced state, before the nanotube forming reaction.

Effects of reaction temperature

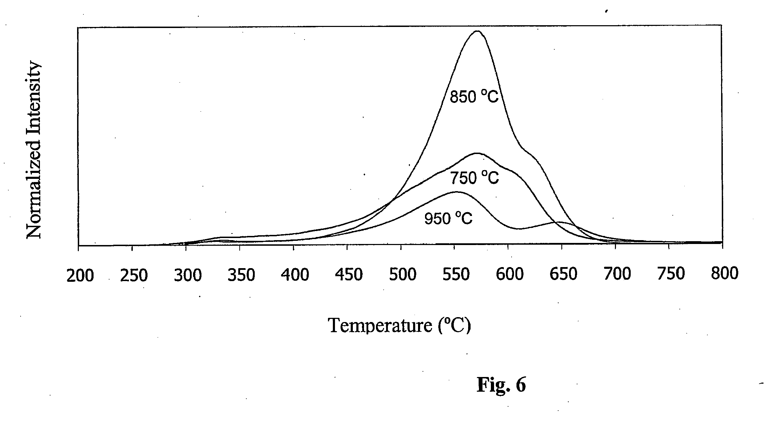

Pre-reduction in hydrogen at 800°C was used as a constant pre-treatment to compare the effect of synthesis reaction temperature on the SWNT yield and selectivity. The CO disproportionation reaction conditions were: temperature: 850°C, CO flow rate: 850 sccm; total pressure of 85 psi pure CO; redaction time: 1 hr. The TPO of the product shown In Fig. 6 demonstrates that the reaction at 800°C resulted in the highest SWNT yield and highest SWNT selectivity. Preferably the reaction temperature is in a range of from 650°C to 950°C, and more preferably from 750°C to 900°C, and more preferably from 825°C to 875°C.

The Raman spectra are in good agreement with the TPO data. That is, in a preferred embodiment, pre-reduction occurs at 800°C and the reaction occurs at 850°C.

Effect of Co:Re ratio in the catalyst

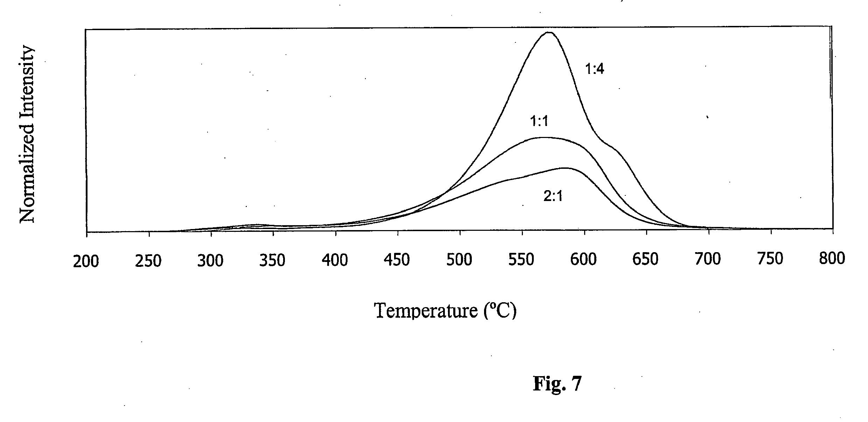

The yield and selectivity of the different Co:Re catalysts were compared after pre-reduction in hydrogen at 800°C and CO disproportionation reaction at 850°C under 850 sccm of CO at total pressure of 85 psi for 1 hr. The TPO of the carbon product obtained on the different catalysts are compared in Fig. 7. The catalyst having the lowest Co:Re ratio (1:4) exhibited the highest SWNT yield. Further, although those catalysts with lower Re content had low yields, they still had high SWNT selectivity.

A Re-only sample (without Co) was tested under the same conditions as the Co-Re sample. On this 2 % Re/SiO₂ catalysts, both the carbon yield and nanotube selectivity were low indicating the necessity of the presence of Co in the catalyst composition.

Preferred operating conditions are a high reactive gas concentration, a temperature in the range of about 650°C-850°C, high pressure (above about 70 psi), and a high space velocity (above about 30,000 h⁻¹) to maintain a low CO₂/reactive gas ratio during the process.

Where used herein, the phrase "an effective amount of a carbon-containing gas" means a gaseous carbon species (which may have been liquid before heating the reaction temperature) present in sufficient amounts to result in deposition of carbon on the catalytic particles at elevated temperatures, such as those described herein, resulting in formation of carbon nanotubes.

As noted elsewhere herein, the catalytic particles as described herein include a catalyst deposited upon a support material. The catalyst as provided and employed in the present invention is bimetallic and in an especially preferred version comprises Co and Re. The present invention comprises at least one metal from Group VIII including Co, Ni, Ru, Rh, Pd, Ir, Fe and/or Pt, with the Ro (from Group VIIb). For example, the catalyst may comprise Co-Re, Ni-Re, Ru-Re, Rh-Re, Ir-Re, Pd-Re, Fe-Re or Pt-Re. The catalyst may also comprise a metal from Group VIb including Cr, W, and Mo, and/or a metal from Group Vb including Nb. The catalyst may comprise more than one of the metals from any or all of the groups listed above.

Where used herein, the terms "catalyst" or "catalytic" substrate" refer to a catalytic material comprising catalytic metals alone, or to catalytic metals deposited on a particulate or non-particulate substrate. The term "catalytic particle" refers to a catalyst comprising metals alone and having a particulate structure, or to catalytic metals deposited on a particulate substrate.

The ratio of the Group VIII metal to the Re in the catalytic particles may affect the yield, and/or the selective production of single-walled carbon nanotubes as noted elsewhere herein. The molar ratio of the Co (or other Group VIII metal) to the Re metal in a bimetallic catalyst is from 1:20 to 20:1; preferably 1:10 to 10:1; more preferably from 1:8 to 1:1; and most preferably 1:4 to 1:3 to 1:2. Generally, the concentration of the Re metal exceeds the concentration of the Group VIII metal (e.g., Co) In catalysts employed for the selective production of single-walled carbon nanotubes.

The catalyst particles may be prepared by simply impregnating the support material with the solutions containing the Re and transition metal precursors (e.g., described above). Other preparation methods of supported catalysts may include coprecipitation of the support material and the selected transition metals. The catalyst can also be formed in situ through gas-phase decomposition of a mixture of precursor compounds including, but not limited to bis (cyclopentadienyl) cobalt and bis (cyclopentadienyl) rhenium chloride,

The catalyst is preferable deposited on a support material such as silica (SiO₂), mesoporous silica such as the MCM-41 (Mobil Crystalline Material-41) and the SBA-15 or other molecular sieve materials, alumina (Al₂O₃), MgO, aluminum-stabilized magnesium oxide, ZrO₂, titania, zeolites (including Y, beta, KL and mordenite), other oxidic supports known in the art and other supports as described herein.

The metallic catalyst may be prepared by evaporating the metal mixtures over support materials such as flat substrates including but not limited to quartz, glass, silicon, and oxidized silicon surfaces in a manner well known to persons of ordinary skill in the art.

The total amount of metal deposited on the support material may vary widely, but is generally in an amount of from 0.1% to 50% of the total weight of the catalytic substrate, and more preferably from 1% to 10% by weight of tho catalytic substrate.

In an alternative version of the invention, the bimetallic catalyst may not be deposited on a support material, in which case the metal components comprise substantially 100% of tho catalyst.

Example of suitable carbon-containing gases which may be used herein include aliphatic hydrocarbons, both saturated and unsaturated, such as methane, ethane, propane, butane, hexane, methylene, and propylene; carbon monoxide; oxygenated hydrocarbons such as ketones, aldehydes, and alcohols including ethanol and methanol; aromatic hydrocarbons such as toluene, benzene and naphthalene; and mixtures of the above, for example carbon monoxide and methane. Use of acetylene promotes formation nanofibers and graphite, while CO and methane are preferred feed gases for formation of single-walled carbon nanotubes. The carbon-containing gas may optionally be mixed with a diluent gas such as helium, argon or hydrogen.

A high space velocity (preferably above 30,000 h⁻¹) is preferred to minimize the concentration of CO₂, a by-product of the reaction in the reactor, which inhibits the conversion to nanotubes. A high CO (or other reactive gas as described herein) concentration is preferred to minimize the formation of amorphous carbon deposits, which occur at low CO (reactive gas) concentrations. Therefore, the preferred reaction for use with the Co-Re catalyst temperature is between 700°C and 900°C; more preferably between 800°C and 875°C; and most preferably around about 850°C.

As noted elsewhere herein, the catalyst may be a catalytic substrate, comprising a catalytic metal which catalyzes formation of carbon nanotubes (such as a Group VIII metal) and rhenium which are disposed upon a support material, wherein the catalytic substrate is able to selectively catalyze the formation of single-walled carbon nanotubes under suitable reaction conditions. Preferably the Group VIII metal is Co, but may alternatively be Ni, Ru, Rh, Pd, Ir, Pt, Fe, and combinations thereof. The catalyst may further comprise a Group VIb metal and or a Group Vb metal.

In one embodiment, the invention comprises a process for producing carbon nanotubes, including the steps of, providing catalytic particles (or catalytic substrates) comprising a support material and bimetallic catalyst comprising Re and Group VIII metal, the catalyst effective In catalyzing the conversion of a carbon-containing gas primarily into single-walled carbon nanotubes, reducing the catalytic particles to form reduced catalytic particles, and catalytically forming carbon nanotubes by exposing the reduced catalytic particles to a carbon-containing gas for a duration of time at a reaction temperature sufficient to cause catalytic production of single-walled carbon nanotube thereby forming a carbon nanotube product comprising reacted catalytic particles bearing the carbon nanotubes. Single-walled carbon nanotubes preferably comprise at least 50% of the total carbon nanotube component of the carbon nanotube product. More preferably single-walled carbon nanotubes comprise 60%, 65%, 70%, 75%, 80%, 85%, 90%, 95%, 97.5%, 98% or 99% of the carbon nanotubes of the carbon nanotube product.

The process may include one or more of the additional steps of treating the reacted catalytic particles to separate the support material from the catalyst, treating the catalyst to separate the single-walled carbon nanotubes from the catalyst, recovering and recombining the support material and the catalyst to form regenerated catalytic particles, feeding the regenerated catalytic particles into the reactor, recycling the carbon-containing gas removed from the reactor after the catalysis step and reusing the carbon-containing gas in the catalysis step, and/or removing amorphous carbon deposited on the reacted catalytic particles.

The step of reducing the catalytic particles or catalytic substrate may further comprise exposing the catalytic particles to a heated reducing gas under elevated pressure. The step of treating the reacted catalytic particles to separate the carbon nanotubes from the catalyst may further comprise treating the catalyst with acid or base to dissolve the catalyst thereby yielding the carbon nanotubes. The recovering and recombining step may be further defined as precipitating the support material and catalyst in separate processing steps then combining the support material and catalyst wherein the support material is impregnated with the catalyst. The process may further comprise calcining and pelletizing the support material before or after the support material is impregnated with the catalyst. The process may be a fixed bed process, a moving bed process, a continuous flow process, or a fluidized-bed type process.

The carbon-containing gas used in the process may comprise a gas selected form the group consisting of CO, CH₄, C₂H₄, C₂H₂, alcohols, or mixtures thereof. The support material may be selected from the group consisting of SiO₂ including precipitated silicas and silica gel, Al₂O₃, MgO, Zro₂, zeolites (including Y, beta KL, and mordenite), mesoporous silica materials such as the MCM-41 and the SBA-15, other molecular sieves, and aluminum-stabilized magnesium oxide.

The Group VIII metal in the catalyst is selected from the group consisting of Co, Ni, Ru, Rh, Pd, Ir, Fe, Pt, and mixtures thereof. The catalytic substrate may further comprise a Group Vlb metal selected from the group consisting of Cr, Mo, W, and mixtures thereof and/or a Group Vb metal. In the step of catalytically forming carbon nanotubes, the carbon-containing gas is preferably exposed to the catalytic substrate at a space velocity exceeding 30,000 h⁻¹.

The invention contemplates a composition of carbon nanotubes produced by the method comprising feeding catalytic particles into a reactor wherein the catalytic particles (or substrate) comprise a support material and a catalyst comprising Re and a Group VIII metal, the catalyst effective in catalyzing the conversion of a carbon-containing gas into carbon nanotubes, reducing the catalytic particles to form reduced catalytic particles and exposing the reduced catalytic particles to a carbon-containing gas for a duration of time at a reaction temperature sufficient to cause catalytic production of carbon nanotubes thereby forming reacted catalytic particles bearing the carbon nanotubes, wherein the carbon nanotubes are substantially single-walled carbon nanotubes.

In-situ generation of Co-Re catalyst for gas-phase production of SWNT:

While not wishing to be constrained by theory, it appears that when Co metal particles are larger than about 2nm, the decomposition of a carbon-containing molecule with Co metal particles does not result in single-walled carbon nanotubes, but rather irregular nanofibers. When carbon starts accumulating on the surface of a large Co particle, dissolution into the bulk of the metal particle takes place. After the solubility limit is exceeded, carbon precipitates out of the metal particle in the form of graphite. By contrast, when the Co particle is small, carbon accumulates on the surface and when the phase separation takes place, the carbon precipitation occurs in the form of a single shell, yielding single-walled carbon nanotubes.

Therefore, it is preferred to keep the Co particles small during the nanotube synthesis process. In the case of Co-Mo catalysts, keeping the Co particle small is accomplished by starting with a highly dispersed oxidic Co-Mo compound such as cobalt molybdate. However, in the case of Co-Re catalysts, the metals are apparently in the metallic state before the reaction starts. Therefore, in order to keep the Co particles small during the formation of single-walled nanotubes, Co and Re need to be in intimate contact wherein Co can be stabilized over Re in a high state of dispersion.

Effective Co-Re catalysts can be used for making single-walled carbon nanotubes in different forms. For example, when the Co-Re catalyst is supported on a solid support such as silica, alumina, magnesia, or titania it must be taken into consideration that any metal-support interaction should not inhibit the Co-Re interaction. Alternatively, Co-Re catalysts can be used as unsupported catalysts in the gas phase by injecting the two precursors into a gas stream of a carbon-containing gas or material such as described above (e.g., CO, ethylene, methane), In such a process Co and Re can be incorporated in the gas phase by injection of metal precursors such as Co and Re carbonyls, or Co and Re organometallic compounds such as cobaltocene and rhenocene in a way that results in Co-Re bimetallic clusters with the surface enriched in Co. This preferred bimetallic structure can be obtained by sequential injection of the Re precursor first and the Co precursor later.

### UTILITY

In one embodiment, tho present invention contemplates a carbon nanotube product comprising single-walled nanotubes deposited on the catalytic substrates contemplated herein, as produced by any of the processes contemplated herein.

The carbon nanotube-catalyst support compositions produced herein can be used, for example, as electron field emitters, fillers of polymers to modify mechanical and electrical properties of the polymers, fillers of coatings to modify mechanical and electrical properties of the coatings, fillers for ceramic materials, and/or components of fuel-cell electrodes. These utilities are described in further detail in U.S. Serial No. 10/834,351 and U.S. Serial No. 60/570,213.

The dispersion of SWNT in polymer matrices can be maximized by "in-situ-polymerization". The properties of the SWNT-polymer composites obtained by this technique are much bettor than those obtained on a physical mixture of the same polymer and the nanotubes. A method which can be used to Incorporate and disperse SWNT in polymers is mini-emulsion polymerization, a well-established method for producing polymer particles with very narrow size distributions. This process has the advantage of requiring substantially less surfactant to stabilize the reacting hydrophobic droplets inside tho aqueous medium than In conventional emulsion polymerization. It also eliminates the complicated kinetics of monomer transfer into micelles that takes place in the conventional emulsion polymerization. SWNT-filled polystyrene (SWNT-PS) and styrene-isoprene composites prepared by this method show distinctive physical features such as: uniform black coloration; high solubility in toluene as well as in tetrahydrofuran (THF); and semiconductor to ohmic electrical behavior.

In-situ-polymerization techniques can also be used to obtain good dispersions of nanotube/catalyst composites in different matrices. Moreover, these composites can be selectively tailored for in-situ-polymerization of specific polymers by adding an active agent to either the composite or the bare catalyst before the nanotubes are produced.

As an example, we have prepared a SWNT/Co-Re/SiO₂, composite which has been doped with chromium to make it active for in-situ-polymerization of ethylene. Any of the catalyst particles bearing SWNT as described herein can be used to form polymers by in-situ-polymerization. Methods of in situ-polymerization and uses of polymer mixture thereby produces are shown in further detail in U.S. Serial No. 10/464,041.

Changes may be made in the construction and the operation of the various compositions, components, elements and assemblies described herein or in the steps or the sequence of steps of the methods described herein without departing from the scope of the invention as defined in the following claims.

CITED REFERENCES

1. Yakobson, B.I.; Smalley, R.E. Amer. Scientist. 1997, 85, 324.

2. Kong, J.A.; Cassell, A.M.; Dai, H. Chem. Phys. Lett. 1998, 292 567.

3. Nikolaev, P.; Bronikowski, M.J.; Bradley R.K.; Rohmund, F.; Colbert, D.T.; Smith, K.A.; Smalley, R.E. Chem. Phys. Lett. 1999, 313, 91.

4. Dai. H. Surf. Sci. 2002, 500, 218.

5. Kitiyanan, B.; Alvarez, W.E.; Harwell, J.H.; and Resasco, D.E. Chem. Phys. Lett. 2001, 317, 497.

6. Herrera, J.E.; Balzano, L.; Borgna, A.; Alvarez, W.E.; Resasco, D.E. J. Catal. 2001, 204, 129.

7. Rao, A.M.; Richter, E.; Bandow, S.; Chase, B.; Eklund, P.C.; Williams, K.A.; Fang, S.; Subbaswamy, K.; Menon, M.; Thess, A.; Smalley, R.E.; Dresselhaus, G.; Dresselhaus, M.S. Science 1997, 275, 187.

8. Rols, S.; Righi, A.; Alvarez, L.; Anglaret, E.; Almairac, R.; Journet, C.; Bernier, P.; Sauvajol, J.L.; Benito, A.M.; Maser, W.K.; Munoz, E.; Martinez, M.T.; de la Fuente, G.F.; Girard, A.; Ameline, J.C. Eur. Phys. J. B. 2000, 18, 201.

9. Bandow, S.; Asaka, S.; Saito, Y.; Rao, A.M.; Grigorian, L.; Richter, E.; Eklund, P.C. Phys. Rev. Lett. 1998, 80, 3779.

10. Barraza, H.; Pompeo, F.; O'Rear, E.; Resasco, D.E., Nano Letters 2, 2002, 797-802.

11. Grady, B.P.; Shanbaugh, R.L.; Resasco, D.E., Journal of Physical Chemistry B 106, 2002, 5852-5858.

## Claims

1. A carbon nanotube product, comprising:
a support material;
a catalytic substrate, comprising:
rhenium and at least one Group VIII metal in a ratio of from 20:1 to 1:20 disposed on the support material; and
carbon nanotubes on the catalytic substrate.

2. The carbon nanotube product of claim 1 wherein the carbon nanotubes primarily comprise single-walled carbon nanotubes.

3. The carbon nanotube product of either of claims 1 or 2 wherein at least one additional catalytic metal is provided selected from the group consisting of Group VIb metals and Group Vb metals.

4. The carbon nanotube product of any one of claims 1-3 wherein the support material of the catalytic substrate is at least one of SiO₂, precipitated silicas, silica gels, mesoporous silica materials, La-stabilized aluminas, aluminas, MgO, ZrO₂, aluminum-stabilized magnesium oxide, and zeolites.

5. The carbon nanotube product of any one of claims 1-4 wherein the catalytic substrate comprises Re, Co and a silica support material.

6. The carbon nanotube product of any one of claims 1-5 wherein at least 75%, 90%, 95% or 99% of the carbon nanotubes are single-walled carbon nanotubes.

7. A nanotube-polymer composite comprising a polymer and the carbon nanotube product of any one of claims 1-6.

8. A ceramic composite material comprising the carbon nanotube product of any one of claims 1-6 and a ceramic matrix.

9. A fuel cell electrode comprising the carbon nanotube product of any one of claims 1-6, an electrocatalyst, and an ionomer.

10. A field emission material comprising the carbon nanotube product of any one of claims 1-6 and a binder, and wherein the field emission material can be adheringly dispersed over an electrode surface.

11. A field emission device comprising the field emission material of claim 10.

12. A method for producing carbon nanotubes, comprising:
providing a catalytic substrate comprising:
a support material;
rhenium and at least one Group VIII metal in a ratio of from 20:1 to 1:20 disposed on the support material; and
contacting the catalytic substrate with a carbon-containing gas in a reactor at a temperature sufficient to catalytically produce carbon nanotubes, said carbon nanotubes being present on the catalytic substrate.

13. The method of claim 12 wherein the carbon nanotubes primarily comprise single-walled carbon nanotubes.

14. The method of either of claims 12 or 13 wherein at least one additional catalytic metal is provided selected from the group consisting of Group Vlb metals, and Group Vb metals.

15. The method of claim 12 to 14 wherein the support material is at least one of SiO₂, precipitated silica, silica gel, molecular sieves or mesoporous silica materials, alumina, MgO, aluminum-stabilized magnesium oxide, ZrO₂ and zeolites.

16. The method of any one of claims 12-14 wherein a ratio of the additional catalytic metal to rhenium is from 1:1 to 1:8.

17. The method of any one of claims 12-16 wherein the catalytic substrate has a concentration of rhenium which exceeds a concentration of the additional catalytic metal in the catalytic substrate.

18. The method of any one of claims 12-17 wherein the catalytic substrate comprises from 1% to 20% by weight of metal.

19. The method of any one of claims 12-18 wherein the carbon-containing gas is at least one of saturated and/or unsaturated aliphatic hydrocarbons including methane, ethane, propane, butane, hexane, ethylene, and propylene; carbon monoxide; oxygenated hydrocarbons including ketones, aldehydes, and alcohols including ethanol and methanol; and aromatic hydrocarbons including toluene, benzene and naphthalene.

20. The method of any one of claims 12-19 wherein the carbon-containing gas further comprises a diluent gas.

21. The method of any one of claims 12-20 wherein the temperature is sufficiently below a thermal decomposition temperature of said carbon-containing gas to avoid substantial formation of pyrolytic carbon.

22. The method of any one of claims 12-21 wherein the temperature is in a range of from 650°C to 950°C, from 700°C to 900°C, or from 800°C to 875°C.

23. The method of any one of claims 12-22 wherein the catalytically produced carbon nanotubes further comprise multi-walled carbon nanotubes.

24. The method of any one of claims 12-23 wherein the reactor in which the catalytic substrate is contacted with the carbon-containing gas is a fluidized bed reactor.

25. The method of any one of claims 12-23 wherein the carbon-containing gas is fed into the reactor having the catalytic substrate disposed therein.

26. The method of any one of claims 12-25 wherein the step of contacting the catalytic substrate with the carbon-containing gas occurs at a high space velocity above 30,000/hour.

27. The method of any one of claims 12-26 wherein single-walled nanotubes comprise at least 60% to 90% to 95% to 99% of the catalytically produced carbon nanotubes.

28. A carbon nanotube product comprising the carbon nanotubes and catalytic substrate of the method of any one of claims 12-27.

## Patentansprüche

1. Kohlenstoffnanoröhre-Erzeugnis, umfassend:
ein Trägermaterial;
ein katalytisches Substrat, umfassend:
Rhenium und mindestens ein Metall der Gruppe VIII in einem Verhältnis von 20:1 bis 1:20, verteilt auf dem Trägermaterial; und
Kohlenstoffnanoröhren auf dem katalytischen Substrat.

2. Kohlenstoffnanoröhre-Erzeugnis nach Anspruch 1, wobei die Kohlenstoffnanoröhren vorwiegend einwandige Kohlenstoffnanoröhren umfassen.

3. Kohlenstoffnanoröhre-Erzeugnis nach Anspruch 1 oder 2, wobei mindestens ein zusätzliches katalytisches Metall bereitgestellt ist, ausgewählt aus der Gruppe, bestehend aus Metallen der Gruppe Vlb und Metallen der Gruppe Vb.

4. Kohlenstoffnanoröhre-Erzeugnis nach einem der Ansprüche 1 bis 3, wobei das Trägermaterial des katalytischen Substrats mindestens eines von SiO₂, Kieselhydrogelen, Kieselgelen, mesoporösen Silicamaterialien, Lastabilisierten Aluminiumoxiden, Aluminiumoxiden, MgO, ZrO₂, Aluminiumstabilisiertem Magnesiumoxid und Zeoliten ist.

5. Kohlenstoffnanoröhre-Erzeugnis nach einem der Ansprüche 1 bis 4, wobei das katalytische Substrat Re, Co und ein Silicaträgermaterial umfasst.

6. Kohlenstoffnanoröhre-Erzeugnis nach einem der Ansprüche 1 bis 5, wobei mindestens 75%, 90%, 95% oder 99% der Kohlenstoffnanoröhren einwandige Kohlenstoffnanoröhren sind.

7. Nanoröhre-Polymer-Zusammensetzung, umfassend ein Polymer und das Kohlenstoffnanoröhre-Erzeugnis nach einem der Ansprüche 1 bis 6.

8. Keramischer Verbundstoff, umfassend das Kohlenstoffnanoröhre-Erzeugnis nach einem der Ansprüche 1 bis 6 und eine Keramikmatrix.

9. Brennstoffzellenelektrode, umfassend das Kohlenstoffnanoröhre-Erzeugnis nach einem der Ansprüche 1 bis 6, einen Elektrokatalysator und ein lonomer.

10. Feldemissionsmaterial, umfassend das Kohlenstoffnanoröhre-Erzeugnis nach einem der Ansprüche 1 bis 6 und ein Bindemittel, und wobei das Feldemissionsmaterial haftend über eine Elektrodenoberfläche verteilt sein kann.

11. Feldemissionsvorrichtung, umfassend das Feldemissionsmaterial nach Anspruch 10.

12. Verfahren zur Herstellung von Kohlenstoffnanoröhren, umfassend:
das Bereitstellen eines katalytischen Substrats, umfassend:
ein Trägermaterial;
Rhenium und mindestens ein Metall der Gruppe VIII in einem Verhältnis von 20:1 bis 1:20, verteilt auf dem Trägermaterial; und
das Inkontaktbringen des katalytischen Substrats mit einem kohlenstoffhaltigen Gas in einem Reaktor bei einer Temperatur, die ausreichend ist, um katalytisch Kohlenstoffnanoröhren herzustellen, wobei die Kohlenstoffnanoröhren auf dem katalytischen Substrat vorliegen.

13. Verfahren nach Anspruch 12, wobei die Kohlenstoffnanoröhren vorwiegend einwandige Kohlenstoffnanoröhren umfassen.

14. Verfahren nach Anspruch 12 oder 13, wobei mindestens ein zusätzliches katalytisches Metall bereitgestellt wird, ausgewählt aus der Gruppe, bestehend aus Metallen der Gruppe Vlb und Metallen der Gruppe Vb.

15. Verfahren nach einem der Ansprüche 12 bis 14, wobei das Trägermaterial mindestens eines von SiO₂, Kieselhydrogel, Kieselgel, Molekularsieben oder mesoporösen Silicamaterialien, Aluminiumoxid, MgO, Aluminiumstabilisiertem Magnesiumoxid, ZrO₂ und Zeoliten ist.

16. Verfahren nach einem der Ansprüche 12 bis 14, wobei das Verhältnis des zusätzlichen katalytischen Metalls zu Rhenium von 1:1 bis 1:8 beträgt.

17. Verfahren nach einem der Ansprüche 12 bis 16, wobei das katalytische Substrat eine Rheniumkonzentration aufweist, die größer ist als eine Konzentration des zusätzlichen katalytischen Metalls in dem katalytischen Substrat.

18. Verfahren nach einem der Ansprüche 12 bis 17, wobei das katalytische Substrat von 1 bis 20 Gewichtsprozent Metall umfasst.

19. Verfahren nach einem der Ansprüche 12 bis 18, wobei das kohlenstoffhaltige Gas mindestens eines von gesättigten und/oder ungesättigten aliphatischen Kohlenwasserstoffen, die Methan, Ethan, Propan, Butan, Hexan, Ethen und Propen beinhalten; Kohlenstoffmonoxid; oxidierten Kohlenwasserstoffen, die Ketone, Aldehyde und Alkohole, die Ethanol und Methanol beinhalten, beinhalten; und aromatischen Kohlenwasserstoffen, die Toluol, Benzol und Naphthalen beinhalten, ist.

20. Verfahren nach einem der Ansprüche 12 bis 19, wobei das kohlenstoffhaltige Gas weiter ein Verdünnungsgas umfasst.

21. Verfahren nach einem der Ansprüche 12 bis 20, wobei die Temperatur in ausreichender Weise unterhalb einer thermischen Zersetzungstemperatur des kohlenstoffhaltigen Gases liegt, um eine wesentliche Bildung von pyrolytischem Kohlenstoff zu vermeiden.

22. Verfahren nach einem der Ansprüche 12 bis 21, wobei die Temperatur in einem Bereich von 650°C bis 950°C, von 700°C bis 900°C oder von 800°C bis 875°C liegt.

23. Verfahren nach einem der Ansprüche 12 bis 22, wobei die katalytisch hergestellten Kohlenstoffnanoröhren weiter mehrwandige Kohlenstoffnanoröhren umfassen.

24. Verfahren nach einem der Ansprüche 12 bis 23, wobei der Reaktor, in welchem das katalytische Substrat mit dem kohlenstoffhaltigen Gas in Kontakt gebracht wird, ein Fließbettreaktor ist.

25. Verfahren nach einem der Ansprüche 12 bis 23, wobei das kohlenstoffhaltige Gas in den Reaktor mit dem darin verteilten katalytischen Substrat zugeführt wird.

26. Verfahren nach einem der Ansprüche 12 bis 25, wobei der Schritt des Inkontaktbringens des katalytischen Substrats mit dem kohlenstoffhaltigen Gas bei einer Hochraumgeschwindigkeit oberhalb von 30.000/Stunde erfolgt.

27. Verfahren nach einem der Ansprüche 12 bis 26, wobei einwandige Nanoröhren mindestens 60% bis 90% bis 95% bis 99% der katalytisch hergestellten Kohlenstoffnanoröhren umfassen.

28. Kohlenstoffnanoröhre-Erzeugnis, umfassend die Kohlenstoffnanoröhren und das katalytische Substrat des Verfahrens nach einem der Ansprüche 12 bis 27.

## Revendications

1. Produit à nanotubes de carbone, comprenant :
un matériau support ;
un substrat catalytique, comprenant :
du rhénium et au moins un métal du Groupe VIII dans un rapport de 20/1 à 1/20 disposés sur le
matériau support ; et
des nanotubes de carbone sur le substrat catalytique.

2. Produit à nanotubes de carbone selon la revendication 1, dans lequel les nanotubes de carbone comprennent principalement des nanotubes de carbone à paroi unique.

3. Produit à nanotubes de carbone selon l'une ou l'autre des revendications 1 ou 2, dans lequel au moins un métal catalytique supplémentaire est fourni, choisi dans le groupe constitué par les métaux du Groupe VIb et les métaux du Groupe Vb.

4. Produit à nanotubes de carbone selon l'une quelconque des revendications 1 à 3, dans lequel le matériau support du substrat catalytique est au moins un élément parmi le SiO₂, les silices précipitées, les gels de silice, les matériaux à base de silice mésoporeuse, les alumines stabilisées par du La, les alumines, le MgO, le ZrO₂, l'oxyde de magnésium stabilisé par de l'aluminium, et les zéolites.

5. Produit à nanotubes de carbone selon l'une quelconque des revendications 1 à 4, dans lequel le substrat catalytique comprend du Re, du Co et un matériau support à base de silice.

6. Produit à nanotubes de carbone selon l'une quelconque des revendications 1 à 5, dans lequel au moins 75 %, 90 %, 95 % ou 99 % des nanotubes de carbone sont des nanotubes de carbone à paroi unique.

7. Composite nanotube-polymère comprenant un polymère et le produit à nanotubes de carbone selon l'une quelconque des revendications 1 à 6.

8. Matériau composite céramique comprenant le produit à nanotubes de carbone selon l'une quelconque des revendications 1 à 6 et une matrice céramique.

9. Electrode de pile à combustible comprenant le produit à nanotubes de carbone selon l'une quelconque des revendications 1 à 6, un électrocatalyseur, et un ionomère.

10. Matériau à émission de champ comprenant le produit à nanotubes de carbone selon l'une quelconque des revendications 1 à 6 et un liant, et dans lequel le matériau à émission de champ peut être dispersé par adhérence à la surface d'une électrode.

11. Dispositif à émission de champ comprenant le matériau à émission de champ selon la revendication 10.

12. Procédé de production de nanotubes de carbone, comprenant :
la fourniture d'un substrat catalytique comprenant :
un matériau support ;
du rhénium et au moins un métal du Groupe VIII dans un rapport de 20/1 à 1/20 disposés sur le
matériau support ; et
la mise en contact du substrat catalytique avec un gaz contenant du carbone dans un réacteur à une température suffisante pour produire catalytiquement des nanotubes de carbone, lesdits nanotubes de carbone étant présents sur le substrat catalytique.

13. Procédé selon la revendication 12, dans lequel les nanotubes de carbone comprennent principalement des nanotubes de carbone à paroi unique.

14. Procédé selon l'une ou l'autre des revendications 12 ou 13, dans lequel au moins un métal catalytique supplémentaire est fourni, choisi dans le groupe constitué par les métaux du Groupe VIb et les métaux du Groupe Vb.

15. Procédé selon la revendication 12 à 14, dans lequel le matériau support est au moins un élément parmi le SiO₂, les silices précipitées, le gel de silice, les tamis moléculaires ou matériaux à base de silice mésoporeuse, l'alumine, le MgO, l'oxyde de magnésium stabilisé par de l'aluminium, le ZrO₂ et les zéolites.

16. Procédé selon l'une quelconque des revendications 12 à 14, dans lequel le rapport du métal catalytique supplémentaire au rhénium va de 1/1 à 1/8.

17. Procédé selon l'une quelconque des revendications 12 à 16, dans lequel le substrat catalytique a une concentration de rhénium qui dépasse une concentration du métal catalytique supplémentaire dans le substrat catalytique.

18. Procédé selon l'une quelconque des revendications 12 à 17, dans lequel le substrat catalytique comprend 1 à 20 % en poids de métal.

19. Procédé selon l'une quelconque des revendications 12 à 18, dans lequel le gaz contenant du carbone est au moins un élément parmi les hydrocarbures aliphatiques saturés et/ou insaturés comprenant le méthane, l'éthane, le propane, le butane, l'hexane, l'éthylène et le propylène ; le monoxyde de carbone ; les hydrocarbures oxygénés comprenant les cétones, les aldéhydes, et les alcools comprenant l'éthanol et le méthanol ; et les hydrocarbures aromatiques comprenant le toluène, le benzène et le naphtalène.

20. Procédé selon l'une quelconque des revendications 12 à 19, dans lequel le gaz contenant du carbone comprend en outre un gaz diluant.

21. Procédé selon l'une quelconque des revendications 12 à 20, dans lequel la température est suffisamment inférieure à la température de décomposition thermique dudit gaz contenant du carbone pour éviter une formation substantielle de carbone pyrolytique.

22. Procédé selon l'une quelconque des revendications 12 à 21, dans lequel la température se situe dans une plage de 650 à 950 °C, de 700 à 900 °C, ou de 800 à 875 °C.

23. Procédé selon l'une quelconque des revendications 12 à 22, dans lequel les nanotubes de carbone produits catalytiquement comprennent en outre des nanotubes de carbone à parois multiples.

24. Procédé selon l'une quelconque des revendications 12 à 23, dans lequel le réacteur dans lequel le substrat catalytique est mis en contact avec le gaz contenant du carbone est un réacteur à lit fluidisé.

25. Procédé selon l'une quelconque des revendications 12 à 23, dans lequel le gaz contenant du carbone est chargé dans le réacteur dans lequel le substrat catalytique est disposé.

26. Procédé selon l'une quelconque des revendications 12 à 25, dans lequel l'étape de mise en contact du substrat catalytique avec le gaz contenant du carbone se produit à une vitesse spatiale élevée supérieure à 30 000/heure.

27. Procédé selon l'une quelconque des revendications 12 à 26, dans lequel les nanotubes à paroi unique comprennent au moins 60 à 90 %, 95 % ou 99 % des nanotubes de carbone produits catalytiquement.

28. Produit à nanotubes de carbone comprenant les nanotubes de carbone et le substrat catalytique du procédé selon l'une quelconque des revendications 12 à 27.
